# EUROPEAN PATENT APPLICATION

(11) **EP 3 613 512 A1**
(43) Date of publication of application: **26.02.2020**
(21) Application number: 19188729.8
(22) Date of filing: 26.07.2019
(51) Int. Cl.: B05C 1/02, B05C 1/06, F16B 33/00, B05C 17/00

(54) **FOAM COATING TOOL AND COATING METHOD**

(30) Priority: 14.08.2018 US 201862718429 P
(71) Applicant: Bombardier Inc., Dorval, Québec H4S 1Y9 (CA)
(72) Inventor: PLAMONDON, Alexandre, Ville Mont-Royal, Québec H3P 1P7 (CA); DESROCHERS, Frederic, Montreal, Québec H3L 2W6 (CA); QUDDUS, Michael, Montreal, Québec H4B 2R9 (CA)
(74) Representative: Holmes, Matthew William

(57) **Abstract**

A coating tool (10) includes a holder (20) having an applicator head (22) extending between a first end (22A) and a second end (22B). The applicator head is hollow along at least part of its length to define an internal cavity (28) delimited by an inner wall (30). The applicator head has an outer rim (32) at the first end. A foam applicator (40) has a collar portion (42) attached to the outer rim of the applicator head, and a body portion (44) extending from the collar portion inwardly into the applicator head and disposed within the internal cavity to be displaceable relative to the inner wall. The foam applicator has an applicator opening (46) extending through the collar portion and at least part of the body portion. The foam applicator is made of a foam material (48) which, upon receiving a coating, expands inwardly to reduce a volume of the applicator opening. A coating method is also disclosed.

## Description

### TECHNICAL FIELD

The application relates generally to aircraft structures and, more particularly, to a tool and method for coating same. This application claims priority from US Provisional Patent Application no.: 62/718,429, filed 18th August 2018, the entire contents of which are expressly incorporated by reference herein.

### BACKGROUND

Various surfaces and objects of an aircraft structure must be coated with a fluid before the aircraft can be put into service. When the coating is paint, the paint is often applied with a spray gun and/or paint brush, and in two steps. First, surfaces which do not require the paint are covered or "masked" to protect against overspray. Masking is labour intensive, and difficult to accomplish for parts of the aircraft structure with complicated geometries. In the second step, the paint is applied to the object. The application of the paint with spray guns and brushes often results in too much paint being applied, which incurs a weight penalty. Spray guns are also often incapable of reaching more remote areas of the aircraft structure, which means more labour-intensive paint brushes must be used for these areas. Furthermore, the applied paint must be visually inspected afterwards and possibly retouched manually to ensure that no parts of the object remain uncoated.

### SUMMARY

In one aspect, there is provided a coating tool. The coating tool may comprise a holder having an applicator head extending between a first end and a second end. The applicator head may be hollow along at least part of its length to define an internal cavity delimited by an inner wall. The applicator head may have an outer rim at the first end thereof. The applicator head may have a foam applicator having a collar portion attached to the outer rim of the applicator head, and a body portion extending from the collar portion inwardly into the applicator head and disposed within the internal cavity thereof to be displaceable relative to the inner wall. The foam applicator may have an applicator opening extending through the collar portion and at least part of the body portion. The foam applicator may be made of a foam material which, upon receiving a coating, expands inwardly to reduce a volume of the applicator opening.

In an embodiment of the coating tool, the collar portion of the foam applicator is bonded to the outer rim, and the body portion of the foam applicator is free of attachment to the inner wall of the applicator head.

In an embodiment of the coating tool, the collar portion of the foam applicator includes a first collar wall attached to the outer rim of the applicator head, a second collar wall spaced apart from the first collar wall and the outer rim, and a side collar wall extending between the first and second collar walls.

In an embodiment of the coating tool, the body portion of the foam applicator has an outer side wall having a first diameter, and the side collar wall of the collar portion has a second diameter being greater than the first diameter.

In an embodiment of the coating tool, the applicator opening of the foam applicator is delimited by an inner applicator wall, the inner applicator wall being substantially planar prior to the foam material receiving the coating, the inner applicator wall being curved upon the foam material receiving the coating.

In an embodiment of the coating tool, the foam material is resiliently compressible.

In an embodiment of the coating tool, the applicator head has an internal flange at the second end thereof extending inwardly from the inner wall, the body portion of the foam applicator abutting against the internal flange.

In an embodiment of the coating tool, the internal flange has a flange opening in fluid communication with the internal cavity, and the holder has a coating conduit extending from the second end of the applicator head away from the internal flange, the internal cavity being in fluid communication with an interior of the coating conduit via the flange opening.

In an embodiment of the coating tool, the coating tool further comprises a source of coating having a source opening in fluid communication with the interior of the coating conduit, the source of coating being operable to supply the coating to the body portion of the foam applicator in the internal cavity via the interior of the coating conduit and the flange opening.

In another aspect, there is provided a method of coating an object, comprising: providing a coating to a foam applicator having an applicator opening to receive the object therein, the foam applicator disposed within an applicator head and attached thereto such that a part of the foam applicator is fixed to the applicator head and a remainder of the foam applicator is free to move with respect to the applicator head, the coating causing the remainder of the foam applicator to expand inwardly relative to the applicator head to provide a reduced-volume applicator opening; and placing the foam applicator over the object to position the object within the reduced-volume applicator opening to coat the object.

In an embodiment of the method, placing the foam applicator over the object includes resiliently compressing the foam applicator with the object within the reduced-volume applicator.

In an embodiment of the method, placing the foam applicator over the object includes repeatedly placing the foam applicator over multiple objects with a robotic arm.

In an embodiment of the method, placing the foam applicator over the object includes displacing the foam applicator along an axis of the object in a first direction to envelop the object with the foam applicator, and displacing the foam applicator along the axis of the object in a second direction opposite to the first direction to remove the foam applicator from the object.

In an embodiment of the method, placing the foam applicator over the object includes placing the applicator over a mechanical fastener.

In an embodiment of the method, providing the coating to the foam applicator includes at least one of coating a surface delimiting the applicator opening, feeding the coating to a body of the foam applicator through a tube, and feeding the coating through pores of the foam applicator.

In an embodiment of the method, placing the foam applicator over the object includes coating the object to have a predetermined thickness of the coating on the object.

In a further aspect, there is provided a method of making a coating tool, comprising: providing a holder having an applicator head being hollow along at least part of its length to define an internal cavity, the applicator head having an outer rim; positioning a first part of a foam applicator in the internal cavity of the applicator head, and positioning a second part of the foam applicator against the outer rim; and attaching the second part of the foam applicator to the outer rim of the applicator head, the first part of the foam applicator being free of attachment to the applicator head.

In an embodiment of the method, positioning the second part of the foam applicator against the outer rim includes compressing the second part against the outer rim with a heated press to melt part of the outer rim and bond the second part of the foam applicator to the outer rim.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### DESCRIPTION OF THE DRAWINGS

Embodiments of the disclosure will now be described, by way of example only, with reference to the accompanying figures in which:
Fig. 1 is a schematic perspective view of an aircraft;
Fig. 2 is a perspective view of a structure of the aircraft of Fig. 1 with objects thereon to be coated with a coating tool, according to an embodiment of the present disclosure;
Fig. 3A is a perspective view of a holder of the coating tool of Fig. 2, shown in a disassembled state;
Fig. 3B is a perspective view of the holder shown in Fig. 3A, shown in an assembled state;
Fig. 4A is a cross-sectional view of the holder taken along the line IVA-IVA in Fig. 3A;
Fig. 4B is another cross-sectional view of the holder along the same line IVA-IVA, a foam applicator being shown attached to an applicator head of the holder;
Fig. 5A is a perspective view of a foam applicator of the coating tool of Fig. 2;
Fig. 5B is a cross-sectional view of the foam applicator taken along the line VB-VB shown in Fig. 5A, the foam applicator shown in an unexpanded state;
Fig. 5C is another cross-sectional view of the foam applicator taken along the same line VB-VB, the foam applicator shown in an expanded state; and
Fig. 6 is a perspective view of the structure of Fig. 2 shown with objects having a coating.

### DETAILED DESCRIPTION

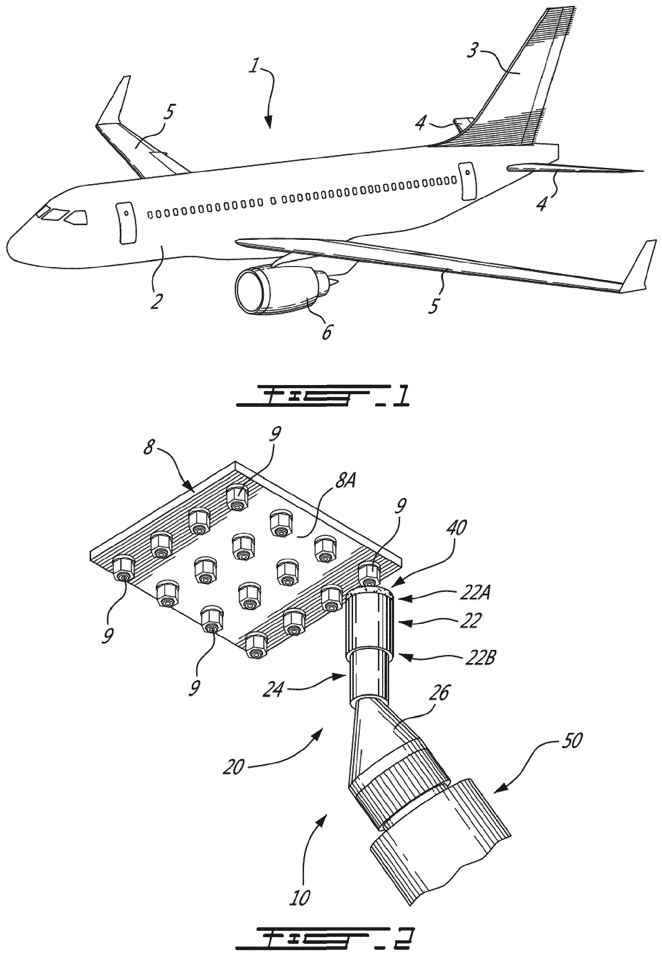

Referring to Fig. 1, an aircraft is shown at 1 and is generally described to illustrate some components for reference purposes in the present disclosure. The aircraft 1 has a fuselage 2 having a fore end at which a cockpit can be located, and an aft end supporting a tail assembly, with the cabin generally located between the fore end and the aft end. The tail assembly has a fuselage-mounted tail, but other configurations may also be used for the aircraft 1, such as cruciform, T-tail, etc. The tail assembly includes a vertical stabilizer 3 with a rudder, and horizontal stabilizers 4 with elevators. The aircraft includes wings 5 that project laterally from the fuselage 2. The aircraft 1 has engines 6 supported by the wings 5, although the engines 6 could also be mounted to the fuselage 2. The aircraft 1 is shown as a jet-engine aircraft, but may also be a propeller aircraft. It is also understood that although Fig. 1 shows a commercial aircraft, the aircraft 1 may alternately be any other type of aircraft, including, but not limited to, a business aircraft or a private aircraft.

The fuselage 2 includes a skin mounted to an internal airframe structure. Part of the airframe structure is shown in Fig. 2, and is designated as structure 8. The structure 8 shown is a structural component which has multiple objects 9 which need to be coated. The objects 9 in Fig. 2 are mechanical fasteners. Each of the objects 9 in Fig. 2 includes a bolt secured through a hole in the structure 8 with a nut. The structure 8 may also have different objects 9 to be coated.

Fig. 2 shows a coating tool 10 used to coat the objects 9 of the structure 8, and part of a surface 8A of the structure 8. The coating tool 10 applies a coating to the objects 9. The coating may include, for example, a paint, a sealant, or a corrosion inhibitor, to name but a few examples. In the depicted embodiment, the coating tool 10 is a "single-fastener" coating applicator because it applies the coating to each object 9 separately. In an alternate embodiment, the coating tool 10 is a "multiple-fastener" coating applicator because it applies the coating to multiple objects 9 simultaneously. The coating tool 10 shown in Fig. 2 may be manipulated by a technician manually, or may be a component of a robotic applicator arm used to apply the coating rapidly and in an automated fashion.

The coating tool 10 has a holder 20, and a foam applicator 40 which is positioned within part of the holder 20. The foam applicator 40 receives the coating, and is abuttable against the objects 9 of the structure 8 to apply the coating to the objects 9. The holder 20 includes an applicator head 22 which receives the foam applicator 40, and a coating conduit 24 in fluid communication with the applicator head 22. A source 50 of the coating provides the coating to the foam applicator 40 within the applicator head 22, and is therefore in fluid communication with the coating conduit 24 and the applicator head 22. The source 50 in Fig. 2 is shown as a bottle that is gripped by the technician to manipulate the coating tool 10. The bottle source 50 is squeezed by the technician to force the coating out of the bottle and towards the foam applicator 40. The source 50 may take other forms. For example, the source 50 may take the form of a tube which supplies the coating to a surface of the foam applicator 40 or to its pores. The source 50 may be a pump which pumps the coating to the foam applicator 40. The source 50 may be a coating pad which transfers the coating to the foam applicator 40. In the depicted embodiment, a nozzle 26 is mounted to the bottle source 50, and extends between the source 50 and the coating conduit 24 to guide the flow of coating from the source 50 to the coating conduit 24. In an alternate embodiment, the coating conduit 24 is in direct fluid communication with the source 50. The holder 20 in the depicted embodiment is made from Polylactic Acid (PLA). Other materials for the holder 20 are possible and within the scope of the present disclosure.

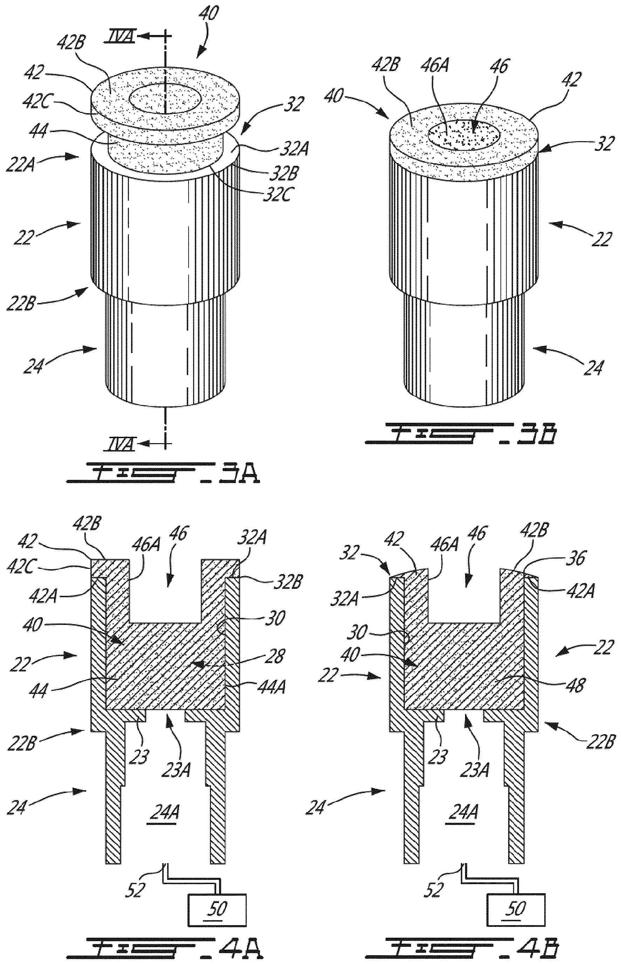

Referring to Figs. 3A to 4B, the applicator head 22 has a length defined between a first end 22A and a second end 22B. The first end 22A of the applicator head 22 is the portion of the applicator head 22 which is closest to the object 9 to be coated when the coating tool 10 is being used. In the depicted embodiment, the second end 22B of the applicator head 22 is closest to the source 50. The applicator head 22 is hollow along some or all of its length to receive therein the foam applicator 40. The applicator head 22 therefore has an internal cavity 28 within a center portion thereof in which part of the foam applicator 40 is located. An inner wall 30 of the applicator head 22 delimits and defines the boundaries of the internal cavity 28. In the depicted embodiment, the applicator head 22 and the internal cavity 28 are cylindrical. Other shapes for the applicator head 22 and for the internal cavity 28 are within the scope of the present disclosure, and the shape of the internal cavity 28 does not need to be the same as the shape of the applicator head 22.

The applicator head 22 has an outer rim 32 at the first end 22A. The outer rim 32 is a distal or outermost portion of the applicator head 22, and is the portion of the applicator head 22 which is closest to the object 9 to be coated when the coating tool 10 is being used. The outer rim 32 includes an outer rim surface 32A defined between an outer edge 32B and an inner edge 32C. The outer rim surface 32A is planar in the depicted embodiment.

Still referring to Figs. 3A to 4B, the foam applicator 40 is an insert that is partially positioned within the internal cavity 28 of the applicator head 22. The foam applicator 40 has two portions or segments which are integral with each other: a collar portion 42 and a body portion 44. The collar portion 42 is the most distal portion of the coating tool 10, and in use, it contacts the surface 8A of the structure 8 which has the objects 9 to be coated. The collar portion 42 abuts against, and is attached to, the outer rim 32, as shown in Figs. 4A and 4B. Attaching the collar portion 42 to the outer rim 32 helps to ensure that the collar portion 42 remains attached to applicator head 22 and in position when applying the coating to the surface 8A, such as a faying surface, of the structure 8. As better shown in Figs. 3A and 4A, the collar portion 42 includes a first collar wall 42A which abuts against and is attached to the outer rim 32 of the applicator head 22, a second collar wall 42B spaced apart from the first collar wall 42A and the outer rim 32, and a side collar wall 42C extending between the first and second collar walls 42A,42B. The second collar wall 42B defines the most distal surface of the coating tool 10, and the side collar wall 42C defines the thickness of the collar portion 42.

The first collar wall 42A of the collar portion 42 is attached to the outer rim surface 32A of the outer rim 32. More particularly, and as shown in Fig. 4B, the first collar wall 42A is bonded to the outer rim surface 32A at a bonded point 36. The bonded point 36 may be formed using any suitable technique. One possible technique involves compressing the collar portion 42 against the outer rim 32 with a heated press or plate, for example at a temperature of about 250°C. This melts the PLA of part of the outer rim 32 into the foam applicator 40 to form the bonded point 36, and thus bond the collar portion 42 of the foam applicator 40 to the outer rim 32. Once bonded using this technique, the second collar wall 42B of the collar portion 42 assumes a rounded shape, as shown in Fig. 4B. The bonded portion of the collar portion 42 does not displace with respect to the outer rim 32.

The body portion 44 extends inwardly from the collar portion 42 into the applicator head 22 and is positioned within the internal cavity 28. The body portion 44 engages the object 9 in order to transfer the coating from the body portion 44 to the object 9. The body portion 44 is displaceable relative to the inner wall 30 which delimits the internal cavity 28. The body portion 44 in the depicted embodiment is free of attachment to the inner wall 30 of the applicator head 22. The foam applicator 40 is therefore only attached or bonded to the outer rim 32 at the bonded point 36, and the remainder of the foam applicator 40 is not attached to the applicator head 22. As will be explained in greater detail below, the body portion 44 displaces with respect to the inner wall 30 by expanding inwardly from the inner wall 30. The body portion 44 of the foam applicator 40 has an outer side wall 44A adjacent to, and facing, the inner wall 30 of the internal cavity 28 of the applicator head 22. In the depicted embodiment where the foam applicator 40 and the applicator head 22 both have cylindrical shapes, the outer side wall 44A of the body portion 44 has a diameter that is less than a diameter of the side collar wall 42C of the collar portion 42. The collar portion 42 is therefore the portion of the foam applicator 40 that has the largest outer diameter or dimension.

Still referring to Figs. 3A to 4B, the foam applicator 40 also has an applicator opening 46 which extends through the collar portion 42 and partly through the body portion 44. The applicator opening 46 is a female component of the foam applicator 40 which receives and engages the object 9 to be coated, to transfer the coating thereto, as explained in greater detail below. When the object 9 is being coated, the applicator opening 46 is a "female" aperture of porous material over the "male" object 9. An inner applicator wall 46A delimits the applicator opening 46. Part of the length of the inner applicator wall 46A is along the collar portion 42, and the remainder of the length is along the body portion 44. The inner applicator wall 46A is porous along with the remainder of the foam applicator 40, as explained in greater detail below.

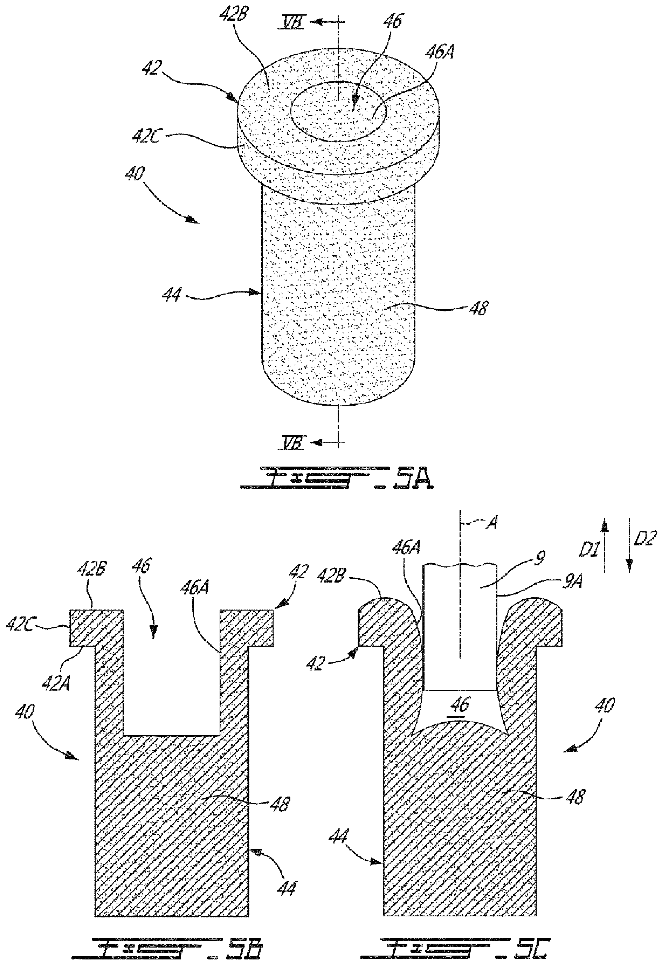

Referring to Figs. 5A to 5C, the foam applicator 40 is made of a foam material 48. The foam material 48 may be similar to the porous material described in US patent 9,433,968, the entirety of which is hereby incorporated by reference. As explained therein and hereinbelow, the foam material 48 may be an organic porous material or a synthetic porous material with a wicking property so that the foam material 48 absorbs the liquid coating to transfer it to the object 9. Wicking includes the absorption of the coating into the foam material by capillary action. The absorbed coating is dispensed by the foam material 48 and deposited on the object 9. At least some of the criteria for selecting the foam material 48 include the compatibility of the foam material 48 with the liquid coating, including the chemical composition and flow properties such as viscosity. Some of the properties that may affect the flow of the coating through the foam material 48 include coating viscosity, coating temperature, coating chemical composition, reactivity of the coating with the foam material 48, the coating holding capacity of the foam material 48, and the geometric form or shape of the foam material 48. The pore size of the foam material 48 may vary depending upon the composition of the coating that is to be applied. The foam material 48 may comprise a wide range of densities and specific gravities.

The foam material 48 is expandable when it is provided with the coating. Fig. 5B shows the foam material 48 of the foam applicator 40 in an unexpanded state. In the unexpanded state before receiving the coating (or after the coating has been applied), the inner applicator wall 46A is substantially flat or planar. In the expanded state, as shown in Fig. 5C, the coated foam material 48 displaces by expanding in the direction of the interior of the coating tool 10 (i.e. in a direction away from the inner wall 30 which delimits the internal cavity 28). The expansion of the foam material displaces the inner applicator wall 46A away from the inner wall 30, and thus causes the size or volume of the applicator opening 46 to decrease. In the embodiment shown in Fig. 5C, the inner applicator wall 46A becomes non-planar when the foam material 48 expands, and is thus shown as being curved. The inner applicator wall 46A therefore changes from a planar wall to a non-planar wall when the foam material 48 receives the coating and undergoes expansion. The expansion of the foam material 48 may occur because of capillary action.

When in the expanded state shown in Fig. 5C, the coated foam material 48 is ready to transfer the coating to the object 9. The reduced-size applicator opening 46 and expanded inner applicator wall 46A abut against sides 9A of the object 9. As shown in Fig. 5C, the smallest diameter of the inner applicator wall 46A in the expanded state is equal to or smaller than the diameter of the object 9. Parts of the applicator opening 46 are therefore equal to or smaller in diameter than the diameter of the object 9. This allows the foam material 48, via the expanded inner applicator wall 46A, to contact and exert a pressure against the sides 9A of the object 9 to transfer the coating thereto. The expanded foam material 48 envelops the sides 9A of the object 9 to transfer the coating on the surface of the foam material 48 to the surface of the sides 9A and other parts of the object 9. The foam material 48 is resiliently compressible. When the coating is transferred to the sides 9A of the object 9, the sides 9A exert a pressure on the foam material 48 to push the foam material 48 and the inner applicator 46A wall toward the inner wall 30 of the applicator head 22. The foam material 48 is therefore capable of returning to its unexpanded state, as shown in Fig. 5B, after the coating has been applied the object 9.

The rate and amount of expansion of the foam material 48 may be exploited to control the quantity and quality of the coating transferred to the object 9, and the longevity of the foam material 48. It may be possible to control the thickness of the coating transferred to the object 9 and/or to the surface 8A.

It will also be appreciated that the coating also causes part of the collar portion 42 to expand, as also shown in Fig. 5C. The second collar wall 42B undergoes expansion as well, and transitions from a substantially planar portion (see Fig. 5B) to a curved or non-planar portion (see Fig. 5C). The expanded second planar wall 42B is able to transfer the coating to the surface 8A of the structure 8. Since the collar portion 42 is bonded to the outer rim 32, the expansion of the collar portion 42 does not block the applicator opening 46 completely.

An example of the foam material 48 and the coating that may be used is provided. Foams or cellular materials provided by Celso SAS of France may be used with paints provided by Mapaero SAS of France. In an embodiment, the foam material 48 is a urethane foam, such as a polyurethane foam, that is compatible with paints provided by Mapaero SAS such that the urethane foam material 48 will not degrade or decompose when exposed to the paint. The foam material 48 may also be compatible with paints provided by Tristar Coating Ltd. such that the foam material 48 will not degrade or decompose when exposed to the paint. In contrast, some conventional foams eventually disintegrate due to their incompatibility with the coating being applied.

Supplying the coating to the foam applicator 40 is now described with reference to Figs. 4A and 4B. The applicator head 22 has an internal flange 23 at the second end 22B. The internal flange 23 extends inwardly from the inner wall 30. The body portion 44 of the foam applicator 40 sits on, or abuts against, the internal flange 23. The internal flange 23 has a flange opening 23A which is in fluid communication with the internal cavity 28. In Figs. 4A and 4B, the diameter of the flange opening 23A is smaller than the diameter of the internal cavity 28. The coating conduit 24, which is a hollow tube or pipe in the depicted embodiment, extends from the second end 22B of the applicator head 22 away from the internal flange 23. The internal cavity 28 is in fluid communication with an interior 24A of the coating conduit 24 via the flange opening 23A. The source 50 of the coating has a source opening 52 which is in fluid communication with the interior 24A of the coating conduit 24. The source 50 is operable to supply the coating to the foam material 48 of the body portion 44 of the foam applicator 40 in the internal cavity 28 via the interior 24A of the coating conduit 24 and the flange opening 23A. In the depicted embodiment, the coating conduit 24 and the applicator head 22 are integral. The coating conduit 24 and the applicator head 22 form a one-piece construction.

Still referring to Figs. 4A and 4B, there is also disclosed a method of coating the object 9. The method includes providing the coating to the foam applicator 40. A part of the foam applicator 40 (e.g. the collar portion 42) is fixed to the applicator head 22, and a remainder of the foam applicator 40 (e.g. the body portion 44) is free to move with respect to the applicator head 22. The coating causes the remainder of the foam applicator 40 to expand inwardly relative to the applicator head 22 to provide the reduced-volume applicator opening 46. The method also includes placing the foam applicator 40 over the object 9 to position the object 9 within the reduced-volume applicator opening 46 to coat the object 9. The method may also include withdrawing the foam applicator 40 after the object 9 has been coated. The method of coating the object 9 is performed in the depicted embodiment without using a coating spray apparatus, or a coating brush. The method, at least in the depicted embodiment, relates to positioning a female aperture of the foam material 48 over a male protrusion or fastener, and controllably flowing the fluid coating to the foam material 48 so as to uniformly coat the fastener. In an embodiment, the foam applicator 40 is repeatedly placed over multiple objects 9 with a robotic arm. The method may also include, as shown in Fig. 5C, displacing the foam applicator 40 along an axis A of the object 9 in a first direction D1 to envelop the object 9 with the foam applicator 40, and displacing the foam applicator 40 along the axis A of the object 9 in a second direction D2 opposite to the first direction to remove the foam applicator 40 from the object 9. This "in-and-out" motion of the foam applicator 40, in contrast to a "back-and-forth" brushing motion, is conducive to automating the coating of the object 9.

The method may also include coating the object 9 to have a predetermined thickness of the coating on the object 9. Regulatory or aircraft certification requirements may require a minimum thickness of coating for the object 9. Furthermore, customer requirements may impose a maximum thickness of coating for the object 9. The method therefore allows for predetermining a thickness for the coating prior to transferring it to the object 9. It may be possible to achieve this predetermined thickness using the coating tool 10 described herein.

Still referring to Figs. 4A and 4B, there is also disclosed a method of making the coating tool 10. The method includes providing the holder 20 and the applicator head 22 as described herein. The method also includes positioning a first part of the foam applicator 40 (e.g. the body portion 44) in the internal cavity 28 of the applicator head 22, and positioning a second part of the foam applicator 40 (e.g. the collar portion 42) against the outer rim 32. The method includes attaching the second part of the foam applicator 40 to the outer rim 32 of the applicator head 22, such as at the bonded point 36. The first part of the foam applicator 22 is free of attachment to the applicator head 22. The method may also include compressing the second part (e.g. collar portion 42) against the outer rim 32 with a heated press to melt part of the outer rim 32 and bond the second part (e.g. collar portion 42) of the foam applicator 40 to the outer rim 32.

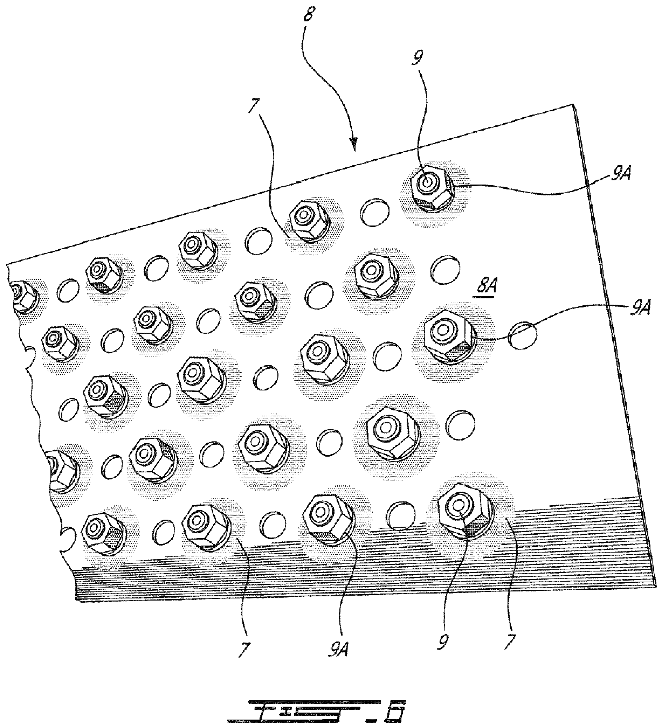

Fig. 6 shows the structure 8 after some of its surface 8A and the object 9 have been coated with the coating 7. The coating 7 has been transferred to the surface 8A and to the object 9 with the coating tool 10 described herein. More particularly, the expanded and coated second collar wall 42B of the collar portion 42 has transferred the coating to the surface 8A of the structure 8, and the expanded and coated inner applicator wall 46A has transferred the coating to the sides 9A and top of the object 9.

In light of the preceding, it will be appreciated that the coating tool 10, in at least some of the depicted embodiments, helps to reduce the cycle time to coat objects 9 such as fasteners, and may help to optimize the amount of coating applied. Since the coating tool 10 does not include a spraying device, it helps to reduce or eliminate the need to "mask" other structures near the structure 8 being coated to protect against overspray. The foam applicator 40 and its expandable foam material 48 may be adaptable to objects 9 of different sizes, which contributes to the versatility of the coating tool 10 and may help with automating the coating method.

The above description is meant to be by way of example only, and one skilled in the art will recognize that changes may be made to the embodiments described without departing from the scope of the invention disclosed. For example, although the coating tool 10 is described herein as being used to coat structures 8 of an aircraft 1, it will be appreciated that the coating tool 10 can be used to coat the objects 9 of structure 8 of different vehicles. Still other modifications which fall within the scope of the present invention will be apparent to those skilled in the art, in light of a review of this disclosure, and such modifications are intended to fall within the appended claims.

## Claims

1. A coating tool (10), comprising:
a holder (20) having an applicator head (22) extending between a first end (22A) and a second end (22B), the applicator head being hollow along at least part of its length to define an internal cavity (28) delimited by an inner wall (30), the applicator head (22) having an outer rim (32) at the first end thereof; and
a foam applicator (40) having a collar portion (42) attached to the outer rim (32) of the applicator head (22), and a body portion (44) extending from the collar portion (42) inwardly into the applicator head and disposed within the internal cavity (28) thereof to be displaceable relative to the inner wall (30), the foam applicator (40) having an applicator opening (46) extending through the collar portion (42) and at least part of the body portion (44), the foam applicator (40) being made of a foam material (48) which, upon receiving a coating, expands inwardly to reduce a volume of the applicator opening (46).

2. The coating tool as claimed in claim 1, wherein the collar portion (42) of the foam applicator (40) is bonded to the outer rim (32), and the body portion (44) of the foam applicator (40) is free of attachment to the inner wall (30) of the applicator head (22).

3. The coating tool as claimed in claim 1 or 2, wherein the collar portion (42) of the foam applicator (40) includes a first collar wall (42A) attached to the outer rim (32) of the applicator head (22), a second collar wall (42B) spaced apart from the first collar wall (42A) and the outer rim (32), and a side collar wall (42C) extending between the first and second collar walls (42A, 42B).

4. The coating tool as claimed in claim 3, wherein the body portion (44) of the foam applicator (40) has an outer side wall (44A) having a first diameter, and the side collar wall (42C) of the collar portion (42) has a second diameter being greater than the first diameter.

5. The coating tool as claimed in any one of claims 1 to 4, wherein the applicator opening (46) of the foam applicator (40) is delimited by an inner applicator wall (46A), the inner applicator wall being substantially planar prior to the foam material receiving the coating, the inner applicator wall (46A) being curved upon the foam material (48) receiving the coating.

6. The coating tool as claimed in any one of claims 1 to 5, wherein the foam material (48) is resiliently compressible.

7. The coating tool as claimed in any one of claims 1 to 6, wherein the applicator head (22) has an internal flange (23) at the second end thereof extending inwardly from the inner wall (30), the body portion (44) of the foam applicator (40) abutting against the internal flange (23).

8. The coating tool as claimed in claim 7, wherein the internal flange (23) has a flange opening (23A) in fluid communication with the internal cavity (28), and the holder (20) has a coating conduit (24) extending from the second end of the applicator head (22) away from the internal flange (23), the internal cavity (28) being in fluid communication with an interior of the coating conduit (24) via the flange opening (23A).

9. The coating tool as claimed in claim 8, further comprising a source (50) of coating having a source opening (52) in fluid communication with the interior of the coating conduit (24), the source (50) of coating being operable to supply the coating to the body portion (44) of the foam applicator (40) in the internal cavity (28) via the interior of the coating conduit (24) and the flange opening (23A).

10. A method of coating an object, comprising:
providing a coating to a foam applicator (40) having an applicator opening (46) to receive the object therein, the foam applicator (40) disposed within an applicator head (22) and attached thereto such that a part of the foam applicator is fixed to the applicator head and a remainder of the foam applicator is free to move with respect to the applicator head, the coating causing the remainder of the foam applicator to expand inwardly relative to the applicator head to provide a reduced-volume applicator opening; and
placing the foam applicator over the object to position the object within the reduced-volume applicator opening to coat the object.

11. The method as claimed in claim 10, wherein placing the foam applicator (40) over the object includes resiliently compressing the foam applicator with the object within the reduced-volume applicator.

12. The method as defined in claimed 10 or 11, wherein placing the foam applicator (40) over the object includes repeatedly placing the foam applicator over multiple objects with a robotic arm.

13. The method as defined in any one of claimed 10 to 12, wherein placing the foam applicator (40) over the object includes displacing the foam applicator along an axis of the object in a first direction to envelop the object with the foam applicator, and displacing the foam applicator along the axis of the object in a second direction opposite to the first direction to remove the foam applicator from the object.

14. The method as defined in any one of claimed 10 to 13, wherein placing the foam applicator (40) over the object includes placing the applicator over a mechanical fastener.

15. The method as defined in any one of claimed 10 to 14, wherein providing the coating to the foam applicator (40) includes at least one of coating a surface delimiting the applicator opening, feeding the coating to a body of the foam applicator through a tube, and feeding the coating through pores of the foam applicator (40).
